# EUROPEAN PATENT APPLICATION

(11) **EP 4 513 045 A1**
(43) Date of publication of application: **26.02.2025**
(21) Application number: 23192697.3
(22) Date of filing: 22.08.2023
(51) Int. Cl.: F16B 19/08, F16B 19/00, B21J 15/02

(54) **JOINING METHOD AND SELF-PIERCING JOINING ELEMENT**

(71) Applicant: Newfrey LLC, New Britain, CT 06053 (US)
(72) Inventor: Sartisson, Vadim, 35394 Giessen (DE); Reis, Christian, 32312 Lübbecke (DE); Demircioglu, Orhan, 35394 Giessen (DE); Stock, Maximilian, 35394 Giessen (DE)
(74) Representative: Witte, Weller & Partner Patentanwälte mbB

(57) **Abstract**

A method (10) for joining components (20, 22), particularly metal components, by means of a joining element (12) which is deformed during the joining process, comprising the following steps: coating (S2, S3) a joining element (12) with a temperature-stable coating (B1,B2) ; preheating (S6) at least one of at least two components (20, 22) in an area of a joining location to a temperature in the range from 90°C to 1.400 °C, preferably by plasma-heating, laser-heating, electric arc heating and/or induction heating, wherein the components (20, 22) are stacked on top of each other; and driving the coated joining element (12) into the stacked components (20, 22).

## Description

The present disclosure relates to a method for joining components, particularly metal components, by means of a joining element which is deformed during the joining process, wherein the components are stacked on top of each other and wherein a joining element is driven in an area of a joining location into the stacked components.

Further, the present invention relates to a joining element for use in a joining method, having a head and a shaft, wherein the joining element deforms when being used in the joining method. A self- piercing rivet (SPR) is an example of such a joining element, which has a hollow shaft.

The SPR is driven by the following procedure. First, an upper component (for example, a high-strength steel plate) and a lower component (for example, an aluminum plate or another steel plate) to be fastened are clamped by a die and the SPR held by a fastening tool or by the die and a nose piece of the fastening tool. When the SPR is punched, the shaft of the SPR pierces and penetrates the upper component. When the shaft of the SPR penetrating the upper component enters the lower component and the lower surface of the lower component comes into contact with the bottom of the die, the bottom of the die cavity pushes back the lower component. As a result, the hollow shaft of the SPR receives a reaction force from the lower component and opens in a ring shape in the lower component without fully penetrating the lower component. A mechanical interlock is formed by opening the shaft of the SPR, and the upper component and the lower component are mechanically fastened.

The number of components to be fastened may be two, three or more. For example, in the case of three components, at least the uppermost component is fully penetrated, and the lowermost component is not fully penetrated. In the production of automobiles, an adhesive is often applied between the components to be fastened in order to improve the performance with regard to load bearing capacity, crash stability, improved corrosion resistance, and Noise, Vibration, Harshness (NVH).

Prior art document DE 10 2014 000 623 B4 discloses a self-piercing rivet which has a corrosion protection layer which is covered by a top layer which allows to adjust setting characteristics as friction and material flow.

For the joining of new materials, the present SPR joining systems are sometimes not satisfactory.

It is therefore the object of the present invention to provide an improved method for joining components and an improved joining element.

The above object is achieved by a method for joining components, particularly metal components, by means of a joining element which is deformed during the joining process, comprising the following steps: coating a joining element with a temperature-stable coating; preheating at least one of at least two components in an area of a joining location to a temperature in the range from 90 °C to 1.400 °C, preferably by plasma-heating, laser-heating, electric arc heating and/or induction heating, wherein the components are stacked on top of each other; and driving the coated joining element into the stacked components.

Further, the above object is solved by a joining element for use in a joining method, particularly in a joining method as defined above, having a head and a shaft, wherein the joining element is at least partially coated with a temperature-stable coating, and is preferably configured to be deformed during the joining method.

For the joining of new materials it has been proven to be advantageous to equip the mechanical joining process with integrated preheating of the components to be joined (so-called thermally assisted mechanical joining processes). Thereby the components to be joined are preheated by means of plasma, laser, induction, electric arc, or similar, and - subsequently or slightly overlapping/parallelized - a joining element is driven into the components to be joined. During the joining process, the joining location is still at a high temperature (at least 90°C, up to 1.400°C). The temperature achieved should be lower than the melting temperature of the component.

Due to the high temperature of the joining point, the coating of prior art joining elements can melt locally during the setting process and, in combination with its deformation, can lead to crack formation in the prior art joining element during the process. Such cracking can occur due to liquid metal embrittlement (LME) / liquid metal induced stress corrosion cracking, local softening of the joining element material, but also due to other effects such as the local change in friction coefficient.

The joining element of the present disclosure, on the other hand, has a heat-stable coating, which however need not be fully temperature-stable for the higher and highest temperatures of the above pre-heating range of 90 °C to 1.400 °C. Further, the coating is preferably deformation-stable and is preferably provided with an adjusted or optimized coefficient of friction. The optimized coefficient of friction can be adjusted by the use of a top-coat with integrated lubricants, for example.

The coating is preferably applied by an alkaline process, e.g. by electroplating, or in an immersion bath, or chemically. Other coating processes are possible. The joining element is preferably from a unitary metal material, particularly steel.

The joining components can be stacked directly on top of each other, wherein it is preferred if they lie on each other without any gap. However, it is preferred if the components are stacked on top of each other, wherein an adhesive is provided therebetween.

During the preheating, at least one of the two components is heated, wherein the heat is typically conducted to the other component and/or to the adhesive.

The components are preferably sheets, particularly metal sheets or plates, but may also be molded parts or extruded profiles.

The joining element is preferably not pre-heated before the joining process, but is provided at room temperature. It is to be understood that the joining element will receive heat from the preheated component(s) during the joining process.

The coated joining element is driven into the stacked components in the area of the joining location.

The combination of deforming joining elements with a temperature-stable coating for thermally assisted mechanical joining processes has not been demonstrated so far.

The coating is preferably a multilayer composite coating system, but can also be a thermally stable one-layer system with added anti-friction agent. Also, a further passivation layer can be provided.

Preferably, the coating is provided such that no melting of the coating occurs in the head area when inserting the rivet, and thus provides an improved corrosion protection. Preferably, the coating on the shaft does not melt either during the joining process.

Particularly, the disclosed joining method allows joining elements to be set without cracking during the thermally assisted mechanical joining processes. Prior art rivets with zinc-tin coatings, on the other hand, may suffer from a large number of cracks in such heat-superimposed processes. It goes without saying that such cracks could also be avoided due to an adjustment of the geometry or the material of the rivet, but such changes lead to other disadvantages, such as increased costs, reduction of the application limits or increase of the joining forces.

The object is therefore achieved in full.

In a preferred embodiment, the coating comprises a base coating which has a high thermal stability, and a friction control coating which is applied on the base coating.

Such a multi-layer coating system has proven to be particularly advantageous in thermally assisted mechanical joining processes. The friction control coating ting controls the friction value, but also improves corrosion resistance, chemical resistance against acids, and acts as another isolation layer.

Here, it is preferred if the base coating is made of a zinc-based coating or a nickel-based coating or a copper-based coating, and is in particular made of at least one material which is selected from the group which comprises: Zn, a Zn alloy, ZnNi, Ni, a Ni alloy, NiP, NiW, Cu, a Cu alloy, CuNi, zinc flake, etc.

Such coating systems have a high abrasion resistance and have melting temperatures of above 250 °C. Further, these coating systems provide good corrosion resistance.

In addition, it is preferred if the friction control coating is an organic coating, particularly an organic coating containing aluminum. Particularly, it is preferred if the friction control coating is made of at least one material which is selected from the group which comprises: Magni B18, Torque'N'Tension, Microgleit DF 921, etc.

Magni B18 is a well-known top coat. The same applies to the other above-listed coating materials of other manufacturers.

Further, it is preferred if the friction control coating has a friction coefficient in a range from 0.07 to 0.19, particularly in a range from 0.08 to 0.18, preferably in a range from 0.12 to 0.18 or in a range from 0.08 to 0.13.

On the other hand, it is preferred if the base coating has a thickness in a range from 3 µm to 12 µm, particularly in a range from 5 µm to 10 µm.

A base coating is preferably (i) a zinc based coating which includes preferably 8 % to 20 % nickel, particularly 12 % to 16 % nickel or (ii) a nickel based coating which includes preferably 1 % to 15 % phosphor or which includes preferably 30 % to 35 % tungsten, or (iii) a copper based coating.

Further, it is particularly preferred if the base coating is provided with a passivation layer before the friction control layer is applied.

The passivation layer provided on top of the base coating by a passivation process has a thickness which is preferably in a range from 50 nm to 400 nm.

The passivation process is preferably a chemical process for reducing the reactivity of this layer and for delaying white rust formation or corrosion of the base coating.

Further, it is preferred if after the passivation process, the joining element is baked as a post heat treatment, e.g. for hydrogen de-embrittlement.

Further, it is preferred if the friction control coating has a thickness in a range from 1 µm to 6 µm, particularly in a range from 2 µm to 4 µm.

As described above, the coating of the joining element is preferably a multi-layer coating as described above.

In another preferred embodiment, the coating is a one-layer system which preferably includes an anti-friction component as an addition.

Here, the coating system can be a zinc flake coating to which is added an anti-friction agent/component. The one-layer system may, however, be realized without any additional agent, and may be a PURE Ni coating.

Further, the joining element is preferably a punch rivet, particularly a self-piercing rivet (SPR).

Further, it is preferred if the joining element has a Vickers hardness in a range from 220 ± 30 HV10 to 590 ± 30 HV10, particularly in a range from 380 ± 30 HV10 to 510 ± 30 HV10.

In general, the joining element can have all typical hardnesses, from below H0 to H6, particularly from H2 to H4.

In the self-piercing rivet which is used in the joining method, the coating is provided preferably on its entire surface, although it is generally possible to provide the coating only in certain areas of the surface. Particularly, it is preferred if at least the outer circumference of the shaft and the head top surface are coated, because the friction coefficient is of particular relevance in the area of the shaft of the rivet, and because the head top surface needs to be coated in order to provide the necessary corrosion resistance. Preferably, a head underside radius and/or an annular cutting edge of the shaft and/or an annular radial end surface of the shaft are coated as well.

It will be understood that the afore-mentioned features and to be described hereinafter cannot only be used in the respectively given combination, but also in different combinations or independently, without leaving the scope of the present invention.

Further features and advantages of the invention can be taken from the subsequent description of preferred embodiments with reference to the drawings. In the figures:
- Fig. 1: is a schematic flowchart of a method for joining components;
- Fig. 2: is a schematic sectional view of a self-piercing rivet;
- Fig. 2a: is a detail Ila of Fig. 2;
- Fig. 3a: is a sectional view of a joint produced by the disclosed method for joining components using a self-piercing rivet;
- Fig. 3b: is a detail of Fig. 3a;
- Fig. 4a: is a sectional view comparable to Fig. 3a of a comparison example;
- Fig. 4b: is a detail of Fig. 4a;
- Fig. 5a: is a sectional view comparable to Fig. 3a of another comparison example; and
- Fig. 5b: is a detail of Fig. 5a.

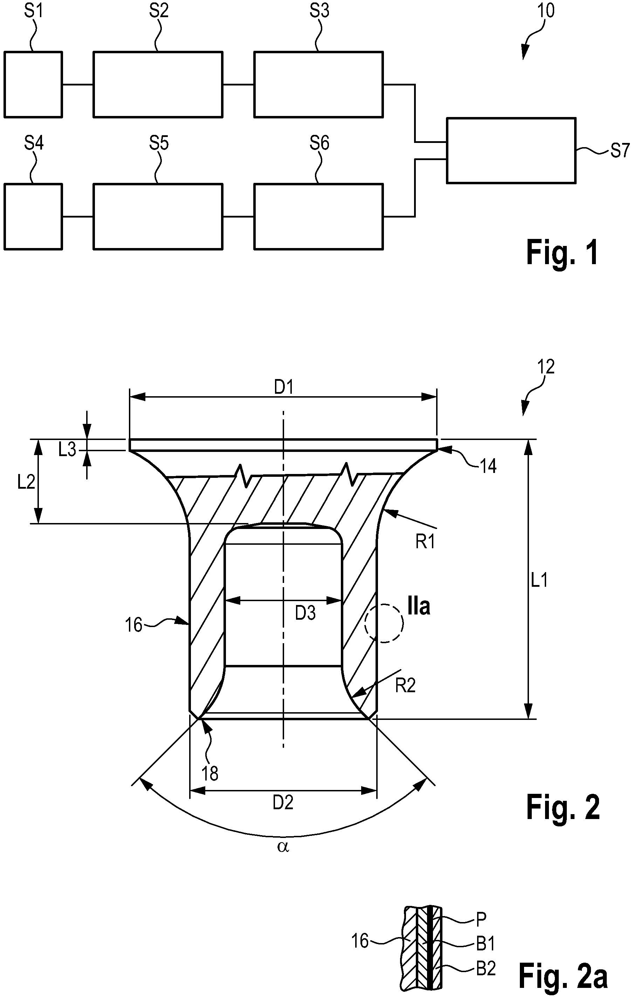

In Fig. 1, a method for joining components is shown in a schematic flowchart 10.

The flowchart 10 includes a step S1 in which at least two components are provided. The components are preferably metal components, particularly sheet components.

The first, upper component is a metal sheet, preferably a steel sheet or an aluminum sheet or a magnesium sheet, for example made of Usibor 2000.

The second component is a metal sheet, which can be made of EN AW-5182.

In a step S2, the two components are inserted into a joining tool (or the joining tool is moved to the components), particularly a self-piercing riveting tool, where they are stacked on top of each other, preferably with an adhesive therebetween.

In a step S3, at least one of the components is heated in an area of a joining location to a temperature in the range from 90 °C to 1.400 °C, preferably by plasma-heating, laser-heating, electric arc heating and/or induction heating. The preheating is done while the components are stacked on top of each other.

The joining tool typically has a lower die and has a punch tool for driving joining elements such as an SPR into the stacked components. The tool typically has a nose piece. The component stack is typically arranged in the tool such that a joining area thereof is placed upon the die and below the nose piece, wherein, subsequently, the component stack is typically clamped between the nose piece and the die before the joining process starts. The clamping step may be performed before or after the preheating step.

On the other hand, in a step S4, a joining element such as a self-piercing rivet is provided. In a step S5, the joining element is coated. Particularly, the joining element is first coated with a base coating, wherein the base coating is preferably passivated, and is subsequently coated with a friction control coating.

As an alternative, the joining element can be coated with an improved one-layer coating in step S5.

It is to be understood that the joining component is not coated at the same time as the components are stacked. Rather, the joining element is provided such that steps S4 and S5 are conducted well before the joining process, and well before steps S1 to S3.

In step S6, a coated joining element is inserted into the joining tool.

In a step S7, the coated joining element is driven into the preheated stacked components, so as to produce a self-pierced rivet joint.

The joining element is preferably a self-piercing rivet but could be any other type of joining element which is deformed during the joining process. A self-piercing rivet that can be used for the above joining method 10 is shown in Figs. 2, 2a.

The self-piercing rivet (SPR) 12 has a head 14 and a hollow shaft 16. The hollow shaft 16 has an end which is opposite to the head 14 and which forms an annular cutting edge 18.

The material of the self-piercing rivet can be 37MnB4, for example. The material of the joining element has typically a hardness in a range from 220 ± 30 HV10 to 590 ± 30 HV10, particularly in a range from 380 ± 30 HV10 to 510 ± 30 HV10, measured as a Vickers hardness. The hardness may be in a range from below *H0 to H6.*

Self-piercing rivets such as the rivet 12 shown in Fig. 2 can have a variety of different dimensions, depending on the respective application. The following examples of dimensions of the self-piercing rivet 12 shown in Fig. 2 are therefore considered to be examples only and are not intended to limit the rivet to these dimensions.

The self-piercing rivet 12 has an axial length L1 of for example 5.0 mm. The head 14 has an outer diameter D1 of for example 5.5 mm or 7.8 mm.

The shaft 16 has an outer diameter D2 of for example 3.35 mm or 5.3 mm.

An inner diameter D3 of the shaft 16 is smaller than the outer diameter D2.

The head 14 has an axial length L2 of for example 1.5 mm. The head has a crown with a constant outer diameter (the diameter D1), which has an axial crown length L3 of 0.2 mm.

The underside of the head reduces from the outer diameter D1 to the outer diameter D2 by means of a radius R1 which is for example 1.8 mm.

The shaft 16, in the area of its annular cutting edge 18, has a shaft inner chamfer, which is designed by a second radius R2 of for example 1.3 mm.

The opening angle of the shaft inner chamfer, α, is preferably 90°.

If the self-piercing rivet 12 is driven into the stacked components, it pierces with its annular cutting edge 18 into the upper component and, during the further joining process, the shaft fully penetrates the upper component. When the shaft enters the lower component, the lower surface of the lower component comes into contact with the bottom of the die, so as to create a reaction force. As a result, the hollow shaft of the rivet opens in a ring shape in the lower component without penetrating the lower component.

This basic principle is the same for any self-piercing rivet, wherein, as mentioned above, the dimensions thereof may vary.

Typically, the rivets used in such process are provided with a coating which can be tin zinc, for example. Such a coating is typically sufficient when using the rivet in normal self-piercing rivet processes.

Further, the rivet is typically provided with a lubricant before being used in the joining process.

Another typical coating of such rivets is Tri-ALLOY which is typically a composition of Cu, Sn and Zn.

On the other hand, according to the present disclosure, the rivet 12 is provided with a temperature-stable coating, which is preferably a multi-layer coating as shown in Fig. 2a.

Particularly, the rivet 12 is coated first with a base coating B1 which has a high thermal stability. Subsequently, the rivet 12 is coated with a friction control coating B2 which provides an optimized friction coefficient.

The base coating B1 is preferably made of a zinc-based coating or a nickel-based coating or a copper-based coating, and is in particular made of at least one material which is selected from the group which comprises: Zn, a Zn alloy, ZnNi, Ni, a Ni alloy, NiP, NiW, Cu, a Cu alloy, CuNi, zinc flake, etc. The base coating is preferably (i) a zinc based coating which includes preferably 8 % to 20 % nickel, particularly 12 % to 16 % nickel or (ii) a nickel based coating which includes preferably 1 % to 15 % phosphor or which includes preferably 30 % to 35 % tungsten, or (iii) a copper based coating.

In case that the base coating comprises mainly Ni, it may be preferred if a thin copper layer acting as a primer/bonding agent is provided on the rivet 12 before the base coating is applied.

The base coating B1 is preferably provided with a thickness in a range from 3 µm to 12 µm, particularly in a range from 5 µm to 10 µm. The base coating B1 preferably includes 8 % to 20 % nickel, particularly 12 % to 16 % nickel.

On the other hand, the friction control coating B2 is preferably an organic coating, particularly an organic coating containing aluminum. Preferably, the friction control coating B2 is made of at least one material which is selected from the group which comprises: Magni B18, Torque'N'Tension, Microgleit DF 921, etc.

Magni B18 is a top coat produced by the Magni group Weld Magni Group, Inc.. Torque'N'Tension is top coat produced by MacDermid Enthone Industrial Solutions. Microgleit DF 921 is a micro-PE dry-sliding film produced by Microgleit Tribology Solutions.

Preferably, the base coating B1 is passivated so as to produce a passivation layer P before the friction control coating B2 is applied.

The passivation is preferably a chemical passivation using a passivation solution.

Passivation solutions which are suitable for this purpose consist mainly of complexed chromium (III) ions as well as cobalt, nitrate and complex ions (e.g. fluorides or organic acids).

After the passivation process, the rivet 12 is preferably baked (heat posttreatment for hydrogen de-embrittlement).

The friction control coating has, as mentioned above, preferably a friction coefficient in a range from 0.07 to 0.19, particularly in a range from 0.08 to 0.18, preferably in a range from 0.08 to 0.13.

Further, the friction control coating has a thickness which is preferably in a range from 1 µm to 6 µm, particularly in a range from 2 µm to 4 µm.

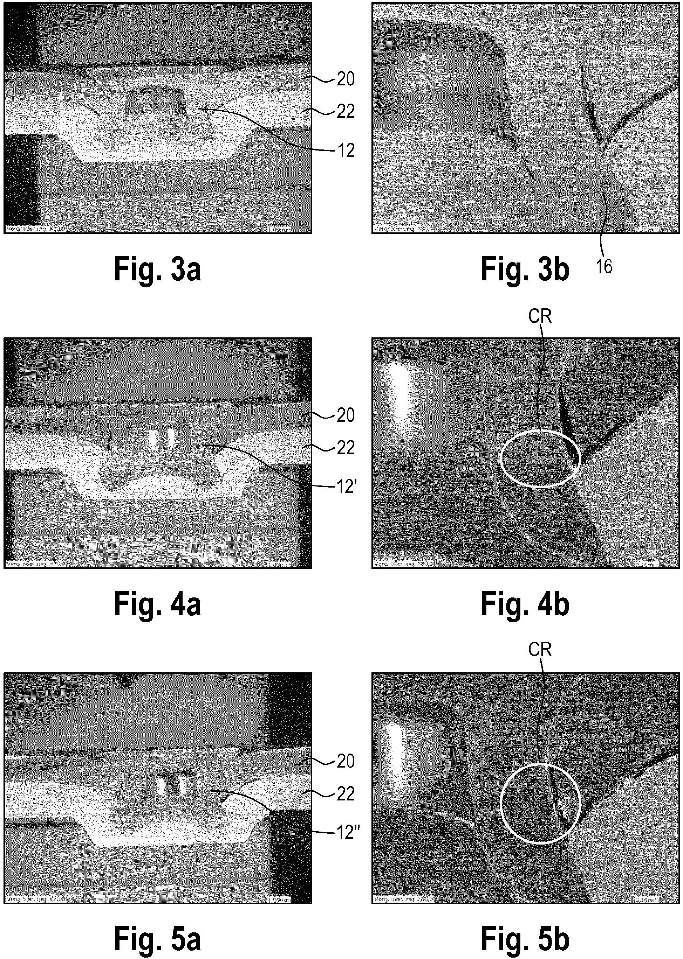

Fig. 3a and Fig. 3b show an example of a joint which is produced with a rivet 12 which was produced from 37MnB4 with a hardness H4.

Further, the lower metal component was made of AIMg4,5Mn0,4, with a thickness of 2 mm. The upper component 20 was made of Usibor 2000 (Cr1900T-MB-DS (gemäß Enfiniurf VDA239-500 (Mai 2021))). The joining force was in the range between 55 kN and 60 kN.

The rivet 12, according to Fig. 3a, has pierced the upper component 20 and has entered the lower component 22 without piercing through the lower component 22. As can be seen in the detail of Fig. 3b), the shaft 16 of the rivet 12 has deformed without any cracks.

The crack-free setting of the rivet 12 can be attributed to the coating of the rivet 12 which was in this case a ZnNi base coating B1, a passivation layer P as described above, and a Magni B18 top coat with integrated lubricant.

On the other hand, Fig. 4a and Fig. 4b show a comparison example, where the same components 20, 22 have been used and a rivet 12' which was coated with Tri-ALLOY instead.

As can be seen in Fig. 4b, cracks CR have developed in the shaft 16.

In Fig. 5a und Fig. 5b, another comparison example is shown.

Here, the components 20, 22 are identical to the ones of Fig. 3a, 3b. The rivet 12" has been coated with a mechanical SnZn coating and a lubricant. As is shown in Fig. 5B, in this case as well cracks CR may occur in the shaft 16.

Therefore, it has been proven that the coating as shown in Fig. 2a and described above, is superior to the classic coatings of self-piercing rivets if the self-piercing rivet is used in a thermally assisted mechanical joining process where the joining location is preheated to a temperature in the range from 90 °C to 1.400 °C.

As an alternative to the coating of Fig. 2a, which consists essentially of three layers B1, P, B2, a one-layer system can be applied to the rivet 12 as well, which includes an anti-friction component as an additional agent.

For example, the one-layer system can be a zinc flake coating which includes an anti-friction component.

Examples for such one-layer systems are GEOMET 500 as produced by NOF METAL COATINGS EUROPE which provides a controlled friction value between 0.12 and 0.18.

Another example of such a one-layer system is DELTA-Protekt KL 105 which is manufactured by Dörken Coatings. This coating as well provides a defined coefficient of friction window between 0.12 and 0.18.

### Reference Numerals:

- 10: joining method
- 12: joining element
- 14: head
- 16: hollow shaft
- 18: annular cutting edge
- 20: upper component
- 22: lower component

- S1-S7: method steps
- B1: base coating
- B2: friction control coating
- P: passivation layer
- L1: joining element length
- L2: head length
- L3: crown length
- D1: head diameter
- D2: shaft outer diameter
- D3: shaft inner diameter
- R1: head underside radius
- R2: shaft inner chamfer radius
- α: chamfer angle
- CR: cracks in shaft

## Claims

1. A method (10) for joining components (20, 22), particularly metal components, by means of a joining element (12) which is deformed during the joining process, comprising the following steps:
- coating (S2, S3) a joining element (12) with a temperature-stable coating (B1, B2);
- preheating (S6) at least one of at least two components (20, 22) in an area of a joining location to a temperature in the range from 90°C to 1.400 °C, preferably by plasma-heating, laser-heating, electric arc heating and/or induction heating, wherein the components (20, 22) are stacked on top of each other; and
- driving the coated joining element (12) into the stacked components (20, 22).

2. The method of claim 1, wherein the coating comprises a base coating (B1) which has a high thermal stability and a friction control coating (B2) which is applied on the base coating.

3. The method of claim 2, wherein the base coating (B1) is made of a zinc-based coating or a nickel-based coating or a copper-based coating, and is in particular made of at least one material which is selected from the group which comprises: Zn, a Zn alloy, ZnNi, Ni, a Ni alloy, NiP, NiW, Cu, a Cu alloy, CuNi, zinc flake, etc.

4. The method of claim 2 or 3, wherein the friction control coating (B2) is an organic coating, particularly an organic coating containing aluminum, and is preferably made of at least one material which is selected from the group which comprises: Magni B18, Torque'N'Tension, Microgleit DF 921, etc.

5. The method of any one of claims 2 to 4, wherein the friction control coating (B2) has a friction coefficient in a range from 0.07 to 0.19, particularly in a range from 0.08 to 0.18, and preferably in a range from 0.12 to 0.18 or in range from 0.08 to 0.13.

6. The method of any one of claims 2 to 5, wherein the base coating (B1) has a thickness in a range from 3 µm to 12 µm, particularly in a range from 5 µm to 10 µm.

7. The method of any one of claims 2 to 6, wherein the base coating is preferably (i) a zinc based coating which includes preferably 8 % to 20 % nickel, particularly 12 % to 16 % nickel or (ii) a nickel based coating which includes preferably 1 % to 15 % phosphor or which includes preferably 30 % to 35 % tungsten, or (iii) a copper based coating.

8. The method of any one of claims 2 to 7, wherein the base coating (B1), before applying the friction control coating (B2), is passivated and/or is baked.

9. The method of any one of claims 2 to 8, wherein
- the friction control coating (B2) has a thickness in a range from 1 µm to 6 µm, particularly in a range from 2 µm to 4 µm, and/or wherein
- a passivation layer provided on top of the base coating (B1) by a passivation process has a thickness in a range from 50 nm to 400 nm.

10. The method of claim1, wherein the coating is a one-layer system which preferably includes an anti-friction component as an addition.

11. The method of any one of claims 1 to 10, wherein
- the joining element (12) is a punch rivet, particularly a self-piercing rivet, and/or wherein
- the joining element (12) has a Vickers hardness in a range from 220 ±30 HV10 to 590 ±30 HV10, particularly in a range from 380 ±30 HV10 to 510 ±30 HV10.

12. The use of a joining element (12) which has a coating (B1, B2) providing a high thermal stability and an optimized friction coefficient, in a heat-superimposed mechanical joining process, in particular in a joining method (10) of any one of claims 1 to 11.

13. Self-piercing joining element (12) for use in a joining method, particularly a joining method (10) of any one of claims 1 to 11, having a head (14) and a shaft (16), wherein the self-piercing joining element (12) is at least partially coated with a thermally stable coating.

14. Self-piercing joining element of claim 13, wherein the coating includes a base coating (B1) which has a high thermal stability, and with a friction control coating (B2) which is applied on the base coating (B1).
